# EUROPEAN PATENT APPLICATION

(11) **EP 1 760 581 A1**
(43) Date of publication of application: **07.03.2007**
(21) Application number: 06300924.5
(22) Date of filing: 05.09.2006
(51) Int. Cl.: G06F 9/38, G06F 9/46

(54) **Processing operations management systems and methods**

(30) Priority: 06.09.2005 US 220492
(71) Applicant: Alcatel, 75008 Paris (FR)
(72) Inventor: Hanes, Gordon, Ottawa Ontario K2P OW6 (CA); McBride, Brian, Stittsville Ontario K2S 1E4 (CA); Serghi, Laura Mihaela, Ottawa Ontario K1V 9Y8 (CA); Wilson, David James, Carp Ontario K0A 1L0 (CA)
(74) Representative: Hervouet, Sylvie

(57) **Abstract**

Methods and systems of managing processing operations are disclosed. Processing operations are not restricted to being executed by any particular processor of a multi-processor system. Information associated with a processing operation may be transferred to one processor for use by the processor in executing the processing operation. The processor may or may not actually execute the processing operation. Subsequently, information for the processing operation may be transferred to the same processor or a different processor which has capacity to accept the processing operation for execution. The disclosed techniques are not restricted only to multi-processor systems, and may be useful to transfer information between an external memory and processor registers in a single processor system, for example.

## Description

### Field of the Invention

This invention relates generally to execution of software processing operations and, in particular, to managing software processing operations such as threads.

### Background

In space-limited processing environments such as communication network processor (NP) implementations which are also subject to relatively strict processing time requirements, multiple processors may be provided in as small a space as possible and run as fast as possible.

Processing tasks or operations executed by processors can "block" or halt execution while waiting for the result of a particular instruction, a read from memory for instance. Such wait times impact processor efficiency in that a processor is not being utilized while it awaits completion of an instruction. Mechanisms which improve the utilization of a processor can greatly improve the performance of a multi-processor system.

Threads, which are sequential instructions of software code, provide a means of improving processing system efficiency and performance. An active thread is one in which instructions are being processed in the current clock cycle. When a thread becomes inactive, another thread may be exchanged for the current thread, and begin using the processing resources, improving processing efficiency of the system. One active thread may be executed while another one is in a non-active state, waiting for the result of an instruction, for example.

Current hardware threading techniques associate a fixed number of threads with a processing engine. The fixed number of threads may be much less than required for many systems.

Each thread is also typically associated with specific hardware for execution. Threads are swapped into and out of the same Arithmetic Logic Unit (ALU). A thread can be executed only by its associated processor, even if other processors in a multi-processor system may be available to execute that thread.

Software threading is an alternative to hardware threading, but tends to be relatively slow. Accordingly, software threading cannot be used to an appreciable advantage to swap threads during memory operations or other operations, since many operations could be completed within the time it takes to swap threads in software. Software threading adds processing overhead and thus slows overall system performance.

Thus, there remains a need for improved techniques for managing software operations.

### Summary of the Invention

Embodiments of the invention provide an architecture which allows a high level of processing system performance in an tightly coupled multiple instruction multiple data (MIMD) environment.

According to an aspect of the invention, there is provided a processing operation manager configured to transfer information associated with a processing operation, for which processing operation associated information had been previously transferred to one of a plurality of processors for use in executing the processing operation, to any processor of the plurality of processors which has capacity to accept the processing operation for execution.

The processing operation may be a thread, in which case the information associated with the processing operation may be one or more thread registers.

In one embodiment, each processor includes an active information store for storing information associated with a processing operation currently being executed by the processor and a standby information store for storing information associated with a processing operation to be executed by the processor when it becomes available, and the manager transfers the information associated with a processing operation to a processor by transferring the information from a memory into the standby information store of the processor.

The manager may be further configured to determine a state of the processing operation, and to determine whether the information is to be transferred to a processor based on the state of the processing operation. For example, the manager may determine a state of each processing operation associated with information stored in the standby information store of each processor, and transfer the information to a processor by transferring the information between the memory and a standby information store in which information associated with a processing operation having a particular state is stored.

The manager might also or instead determine a priority of the processing operation, and determine whether the information is to be transferred to a processor based on the priority of the processing operation. In one embodiment, the manager determines a priority of the processing operation and each processing operation associated with information stored in the standby information store of each processor, and transfers the information to a processor by transferring the information between the memory and a standby information store in which information associated with a processing operation having a lower priority than the processing operation is stored.

The memory may store information associated with one or more processing operations. In this case, the manager may transfer the information associated with each of the one or more processing operations to a processor which has capacity to accept a processing operation for execution.

Selection of a processor for transfer of information associated with each of the one or more processing operations may be made by the manager on the basis of at least one of: states of the one or more processing operations and states of processing operations currently being executed by the plurality of processors, priorities of the one or more processing operations and priorities of processing operations currently being executed by the plurality of processors, states of the one or more processing operations and states of any processing operations to be executed when each of the plurality of processors becomes available, priorities of the one or more processing operations and priorities of any processing operations to be executed when each of the plurality of processors becomes available, and whether each processor is currently executing a processing operation.

The manager may be implemented, for example, in a system which also includes a memory for storing information associated with one or more processing operations. The system may also include the plurality of processors.

According to one embodiment, the manager is implemented using at least one processor of the plurality of processors.

In another broad aspect of the present invention, a method is provided, and includes receiving information associated with a software processing operation, for which processing operation associated information had been previously transferred to a processor of a plurality of processors for use in executing the processing operation, and transferring the information to any processor of the plurality of processors which has capacity to accept the processing operation for execution.

These operations may be performed in any of various ways, and the method may also include further operations, some of which have been briefly described above.

A manager according to another aspect of the invention is to be operatively coupled to a memory and to a processor. The memory is for storing information associated with at least one processing operation, and the processor has access to a plurality of sets of registers for storing information associated with a processing operation currently being executed by the processor and one or more processing operations to be executed by the processor after completion of its execution of the current processing operation. The manager is configured to determine whether information stored in the memory is to be transferred to or from a set of registers of the plurality of sets of registers for storing the one or more processing operations, and if so, to transfer information associated with a processing operation between the memory and the set of registers.

The manager may determine whether information is to be transferred based at least one of states of a processing operation associated with the information stored in the memory and of the one or more processing operations, priorities a processing operation associated with the information stored in the memory and of the one or more processing operations, and whether the processor is currently executing a processing operation.

Other aspects and features of the present invention will become apparent to those ordinarily skilled in the art upon review of the following description of specific illustrative embodiments thereof.

### Brief Description of the Drawings

Examples of embodiments of the invention will now be described in greater detail with reference to the accompanying drawings, in which:
Fig. 1 is a block diagram of a processing system incorporating conventional hardware threading;
Fig. 2 is a block diagram of a processing system incorporating an embodiment of the invention; and
Fig. 3 is a flow diagram illustrating a method according to an embodiment of the invention.

### Detailed Description of Preferred Embodiments

Threads are used to allow improved utilization of a processing unit such as an ALU by increasing a ratio of executing cycles to wait cycles. In upcoming advanced processing architectures, high level programming languages on clustered processors will likely use advanced hardware features, including threading, to improve performance.

In a processing cluster, a thread control block manages the storage of threads, or at least context information associated with threads, while they are not executing. An ALU executing a thread that becomes blocked swaps the current active thread with a standby thread. The standby thread now becomes the active thread and is executed. The swapped out thread can wait in standby registers to become the active executing thread after another swap, when the new active thread blocks.

The thread control block schedules threads based on messages from an operating system or hardware signaling that indicates a blocked condition is now clear.

Thread information is stored by the thread control block in memory such as a Static Random Access Memory (SRAM), allowing a relatively small area requirement for the number of threads supported. As an example, some current designs support up to 8 threads per ALU, whereas others support only 4 or even 2 threads. In a 4-processor system supporting 8 threads per processor, this would result in storage of 32 threads, with each thread being dedicated to one particular processor. Threads cannot move between processors. As an example, 4 processors supporting 8 threads each requires dedicated storage of 32 threads, even if fewer threads, say 20 threads, are actually required. Since threads cannot move between processors, each processor must provide sufficient thread storage independently.

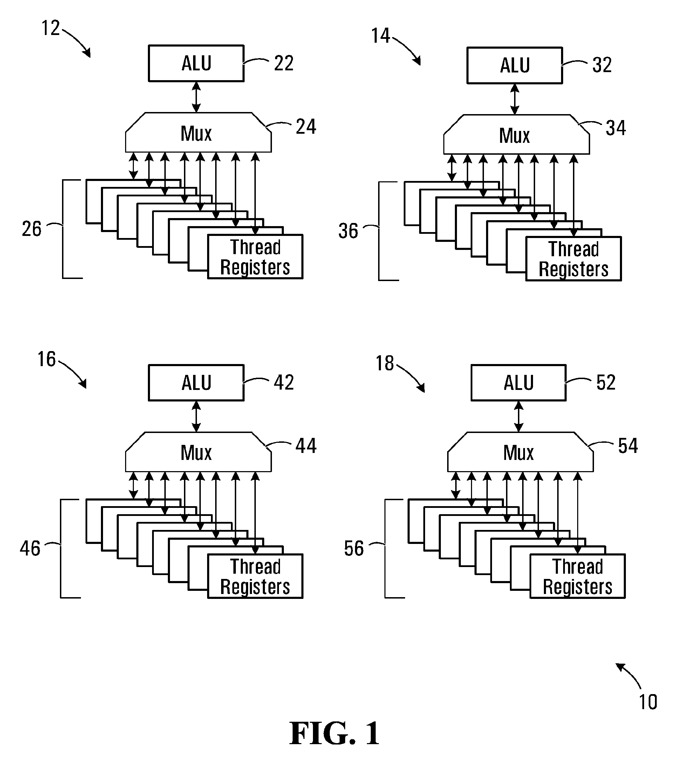

Fig. 1 is a block diagram of a processing system incorporating conventional hardware threading. The processing system 10 includes processors 12, 14, 16, 18, each of which includes an ALU 22, 32, 42, 52, a multiplexer 24, 34, 44, 54, and eight sets of thread registers 26, 36, 46, 56.

As will be apparent from a review of Fig. 1, threads are not shared between the processors 12, 14, 16, 18 in the hardware architecture 10. Each thread is accessed by an ALU 22, 32, 42, 52 through a multiplexing structure represented in Fig. 1 by the multiplexers 24, 34, 44, 54. If any of a processor's eight threads are not used, the storage for the corresponding thread registers cannot be used elsewhere by other threads which are associated with a different processor. Similarly, if thread storage for a processor is used up, adjacent thread storage that is free cannot be accessed. Also, threads cannot be transferred to another processor to continue execution, should the current processor have high utilization.

In a software threading scheme, threads are simply copied to memory. Swapping of threads in this case is extremely slow, since all registers for swapped threads must be copied by a processor. Software threading schemes also generally associate threads with particular processors and accordingly are prone to some of the same drawbacks as conventional hardware threading schemes.

Initial assignment of threads to one of the processors 12, 14, 16, 18 of the system 10 may be handled, for example, by a compiler and an operating system (not shown). The compiler could assign the threads to a processor at compile time, and tasks would identify that they are available to continue execution. The operating system would likely control the actual thread generation at the request of a program and the threads would spawn new threads as required. The operating system or program may issue a command to swap threads based on some trapped event.

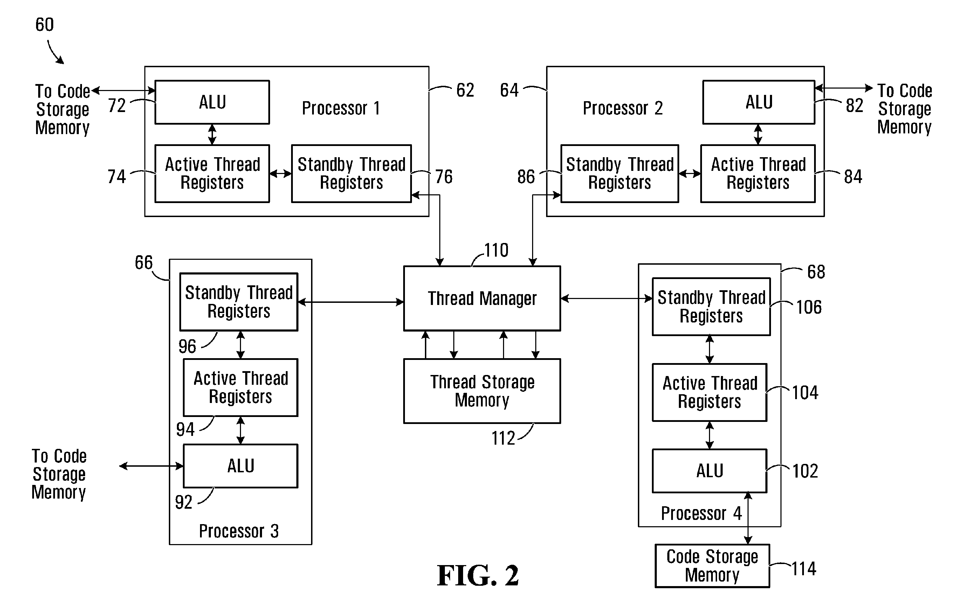

Fig. 2 is a block diagram of a processing system incorporating an embodiment of the invention. The processing system 60 includes four processors 62, 64, 66, 68, a thread manager 110 operatively coupled to the processors, a thread storage memory 112 operatively coupled to the thread manager 110, and a code storage memory 114 operatively coupled to the processors. Each of the processors 62, 64, 66, 68 includes an ALU 72, 82, 92, 102, a set of active thread registers 74, 84, 94, 104, and a set of standby thread registers 76, 86, 96, 106.

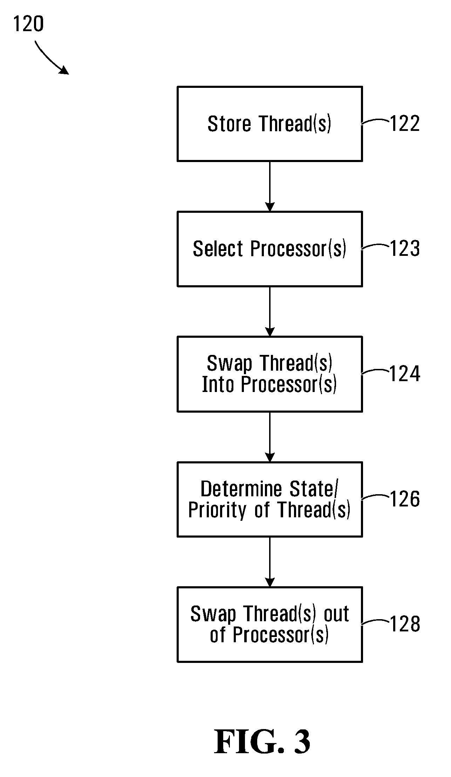

It should be appreciated that the system 60 of Fig. 2, as well as the contents of Fig. 3 described below, are intended solely for illustrative purposes, and that the present invention is in no way limited to the particular example embodiments explicitly shown in the drawings and described herein. For example, a processing system may include fewer or more than four processors, or even a single processor, having a similar or different structure. In another embodiment, active and standby registers of a processor access the processor's ALU through a multiplexing arrangement. Software code executed by a processor may be stored separately, as shown, or possibly in thread registers with thread execution context information. Other variations are also contemplated.

The ALUs 72, 82, 92, 102 are representative examples of a processing component which executes machine-readable instructions, illustratively software code. Threading effectively divides a software program or process into individual pieces which can be executed separately by the ALU 72, 82, 92, 102 of one or more of the processors 62, 64, 66, 68.

Each set of thread registers 74/76, 84/86, 94/96, 104/106 stores context information associated with a thread. Examples of registers which define the context of a thread include a program counter, timers, flags, and data registers. In some embodiments, the actual software code which is executed by a processor when a thread is active may be stored with the thread registers. In the example shown in Fig. 2, however, software code is stored separately, in the code storage memory 114.

Although referred to herein primarily as registers, it should be appreciated that context information need not be stored in any particular type of memory device. As used herein, a register may more generally indicate a storage area for storing information, or in some cases the information itself, rather than the type of storage or memory device.

The thread manager 110 may be implemented in hardware, software such as operating system software for execution by an operating system processor, or some combination thereof, and manages the transfer of threads between the thread storage memory 112 and each processor 62, 64, 66, 68. The functions of the thread manager 110 are described in further detail below.

Like the thread registers, 74/76, 84/86, 94/96, 104/106, the thread storage memory 112 stores thread context information associated with threads. Any of various types of memory device may be used to implement the thread storage memory 112, including solid state memory devices and memory devices for use with movable or even removable storage media. In one embodiment, the thread storage memory 112 is provided in a high density memory device such as a Synchronous Static RAM (SSRAM) or a Synchronous Dynamic (SDRAM) device. A multi-port memory device may improve performance by allowing multiple threads to be accessed in the thread storage memory 112 simultaneously.

The code storage memory 114 stores software code, and may be implemented using any of various types of memory device, including solid state and/or other types of memory device. An ALU 72, 82, 92, 102 may access a portion of software code in the code storage memory 114 identified by a program counter or other pointer or index stored in a program counter thread register, for example. Actual thread software code is stored in the code memory 114 in the system 60, although in other embodiments the thread context information and software code may be stored in the same store, as noted above.

Each processor 62, 64, 66, 68 in the processing system 60 supports 2 sets of "private" thread registers 74/76, 84/86, 94/96, 104/106 for storing information associated with its active and standby threads. The thread storage memory 112 provides additional shared thread storage of, for example, 16 more threads. In this example, there would be an average of 6 system wide threads available to each of the 4 processors. However, in the embodiment shown in Fig. 2, any one processor would have a minimum of 2 threads, corresponding to its 2 private thread registers, assuming that its thread registers store valid thread information, and a maximum of 18 threads.

Any single processor can thus access up to 18 thread stores, including private thread stores and external stores which in some embodiments are common, shared stores. Each processor, or a single processor in one embodiment, may have x sets of thread registers (2 in the example of Fig. 2), from which it can quickly switch between the x threads associated with the information stored in those registers. As noted above, this type of hardware swapping tends to be much faster than software swapping. While an active thread is being executed, the thread manager 110 may transfer information between any of the x-1 standby registers and the thread storage memory 112.

This operation of the thread manager 110 is distinct from a cache system, for example, in that a cache system is reactive. A processor asks for something, and then the cache will either have it locally or fetch it. In contrast, the thread manager 110 may transfer information to a processor, whether in a multi-processor system or a single processor system, before the processor actually needs it.

Raw memory requirements for the threads in the system 60 may be reduced by using high density memory devices. A high density memory device might utilize 3 transistors per bit, for instance, whereas another memory device may require approximately 30 transistors per bit. The high density memory device may thereby allow 248 threads to be stored using the same or a lower number of transistors as 32 threads in other memory devices. This provides potential for a significant increase in threads and/or decrease in the memory space required for thread storage.

As described in further detail below, embodiments of the invention also allow sharing of threads between processors, which may allow the total number of threads to be reduced, providing additional memory space savings.

In operation, the thread manager 110 controls the transfer of information between the standby thread registers 76, 86, 96, 106, illustratively hardware registers, and a memory array, the thread storage memory 112. A standby thread in a standby thread register is made active by swapping with the active thread which is currently being executed by a processor. According to one embodiment, a standby thread is swapped with an active thread of a processor by swapping contents of standby and active thread registers, and a program counter or analogous register from the former standby registers redirects the ALU of the processor to software code for the new active thread.

Thread swapping between standby and active registers within a processor may be controlled by the processor itself, illustratively by the processor's ALU. An ALU may detect that its currently active thread is waiting for a return from a memory read operation for instance, and swap in its standby thread for execution during the wait time. In other embodiments, an external component detects thread blocking and initiates a thread swap by a processor.

A standby thread in a set of standby thread registers 76, 86, 96, 106 of a processor may remain in the standby thread registers until the ALU 72, 82, 92, 102 again becomes available, when the active thread blocks or is completed. The decision as to whether to transfer the standby thread to the shared thread storage memory 112 may be made by a processor's ALU or by the thread manager 110.

It should be noted that a thread is not obligated to be executed on a particular processor if the thread manager 110 places it in the standby registers of that processor, and it has not been swapped into the active registers. The thread manager 110 can remove the thread and replace it with a higher priority thread or transfer it to another now available processor.

For example, transfer of a thread between the thread storage memory 112 and a processor 62, 64, 66, 68 may be based on thread states. In one embodiment, the thread manager 110 determines the states of threads stored in the thread storage memory 112 and threads stored in each set of standby registers 76, 86, 96, 106. A software command or other mechanism may be available for determining thread states. Threads which are awaiting only a processor to continue execution, when data is returned from a memory read operation for instance, may be in a "ready" or analogous state. Blocked or otherwise halted threads in the standby thread registers 76, 86, 96, 106 may be swapped with threads in the thread storage memory 112 which are in a ready state. This ensures that ready threads do not wait in the shared thread storage memory 112 when standby threads are not ready for further execution.

Priority-based thread information transfer and/or swapping is also possible, instead of or in addition to state-based transfer/swapping. A thread may be assigned a priority when or after it is created. A thread which is created by a parent thread, for example, may have the same priority as the parent thread. Priority may also or instead be explicitly assigned to a thread.

By determining thread priorities, using a software command or function for instance, and transferring thread information between the thread storage memory 112 and the standby thread registers 76, 86, 96, 106 based on the determined priorities, threads may be routed to processors in order of priority. Highest priority threads are then executed by the processors 62, 64, 66, 68 before low priority threads.

Priority could also or instead be used, by an ALU for example, to control swapping of threads between standby and active registers 74/76, 84/86, 94/96, 104/106, to allow a higher priority standby thread to pre-empt a lower priority active thread.

According to a combined state/priority approach, both states and priorities of threads are taken into account in managing threads. It may be desirable not to transfer a ready thread out of standby thread registers in order to swap in a blocked thread of a higher priority, for instance. Transfer of the higher priority thread into standby thread registers may be delayed until that thread is in a ready state.

State and priority represent examples of criteria which may be used in determining whether threads are to be transferred into and/or out of the thread storage memory 112 or between the active and standby thread registers 74/76, 84/86, 94/96, 104/106. Other thread transfer/swapping criteria may be used in addition to or instead of state and priority. Some alternative or additional thread scheduling mechanisms may be apparent to those skilled in the art.

Once a thread is stored outside the standby thread registers of a processor, it can be scheduled to any of the other processors. For example, a standby thread can be moved from the processor 62 to the processor 64 through the thread storage memory 112, allowing more efficient use of ALU cycles. Thus, a heavily executing thread might be interrupted less often because waiting threads may have other processors available.

This is an advantage beyond known threading technology. Even though some threading schemes execute simultaneous threads, every thread is associated with one specific processing unit and accordingly must wait for that processing unit to become available. If multiple threads are waiting on the same unit, then only one will execute. In accordance with an embodiment of the present invention, threads compete less because there are more resources available. A thread in the system 60, for instance, can be executed by any of the 4 processors 62, 64, 66, 68.

Also, all processors 62, 64, 66, 68 in the system 60 share the thread storage memory 112, allowing each processor the ability to have a large number of threads on demand, without having to dedicate hardware resources.

More generally, a thread may be considered an example of a software processing operation, including one or more tasks or instructions, which is executed by a processor. In this case, the thread manager 110 would be an example of a processing operation manager which transfers information associated with a processing operation from a memory to one of a plurality of processors having capacity to accept the processing operation for execution. A processor has the capacity to accept a processing operation when it is not currently executing another processing operation, its standby registers are empty, or its standby registers store information associated with an operation having a state and/or priority which may be pre-empted, for example.

Thus, a thread which has been executed by one processor may be passed to the same processor or another processor for further execution. In one sense, this may be considered functionally equivalent to selecting one processor to handle a thread, and subsequently selecting the same or a different processor to handle the thread.

Transfer of information from the thread storage memory 112 to standby thread registers of a processor may involve either moving or copying the information from the thread storage memory.

In the former approach, once thread information has been moved into standby registers of a processor, it is no longer stored in the thread storage memory 112, avoiding the risk of having the same thread wait for execution in the standby registers of two different processors.

If thread information is copied from the thread storage memory 112, however, then another mechanism may be implemented to prevent the transfer of information for the same thread to two different processors. For example, explicit flags or indicators in the thread storage memory 112 could be used to track which information has been transferred into the standby thread registers of a processor. The thread manager 110 would then access these flags or indicators to determine whether information associated with a particular thread has already been transferred to a processor. Each flag or indicator may be associated with thread information using a table, for instance, to map flags/indicators to thread identifiers. Another possible option would be to include a flag or indicator field in data records used to store thread information in the thread storage memory 112. Further variations are also contemplated, and may be apparent to those skilled in the art to which the invention pertains.

Embodiments of the invention have been described above primarily in the context of a system. Fig. 3 is a flow diagram of a method 120 of managing software processing operations in a multi-processor system, according to another embodiment of the invention.

In the method 120, one or more threads are stored to a memory at 122. This may involve swapping a newly created thread or a standby thread from a processor to an external shared memory, for example.

At 123, a processor is selected to handle a stored thread after that thread is ready for further execution. In one embodiment, this selection involves identifying a processor which has capacity to accept a thread for execution. A processor might be considered as having capacity to accept a thread when its standby thread registers are empty, although other selection mechanisms, based on thread state and/or priority for instance, are also contemplated. Operations at 123 may also include selecting a thread for transfer to a processor based on its state and/or priority.

The method 120 proceeds at 124 with an operation of swapping a thread into a selected processor, or more generally transferring information associated with a processing operation, namely the thread, from the memory to the selected processor. Information may also be transferred out of a processor substantially simultaneously at 124, where a processor's standby registers store information associated with another thread which the processor may or may not have executed.

The operations at 122, 123, 124 may be repeated or performed at substantially the same time for multiple threads.

Although processor selection at 123 may be based on the state and/or priority of a thread as noted above, an operation of determining thread state and/or priority has been separately shown at 126, to more clearly illustrate other features of embodiments of the invention. Based on thread state, priority, or both, as determined at 126, an active thread or a standby thread may be swapped out of a processor at 128 so that information associated with a thread having a higher priority, for example, can be transferred into a processor's standby registers. It should be appreciated that the operations at 126, 128 may be repeated or simultaneously applied to multiple threads and processors.

The operations shown in Fig. 3 may subsequently again be applied to a thread which has been swapped out of a processor at 128.

Methods according to other embodiments of the invention may include further, fewer, or different operations than those explicitly shown in Fig. 3, and/or operations which are performed in a different order than shown. The method 120 is illustrative of one possible embodiment. For instance, as noted above, the operation at 122 may involve swapping a thread out of a processor, and the operations at 123 and/or 124 may involve determining the state and/or priority of one or more threads. The separate representation of the state/priority determination 126 and swapping out operation at 128 in Fig. 3 does not preclude these operations from being performed earlier in the method 120 or in conjunction with other operations. Further variations in types of operations and the order in which they are performed are also contemplated.

The systems and techniques disclosed herein may allow a higher number of threads to be available to a processor while maintaining a lower average thread count, relative to conventional thread management techniques, reducing the amount of thread memory required.

Embodiments of the invention may also allow threads to be swapped not only on a single processor but also between processors, thereby improving performance of multi-processor systems.

More tasks may thus be executed on a processor without the reduction in overall performance that would otherwise be seen. Additionally, processor utilization may be increased, in turn increasing the processor performance rating. This is extremely desirable in high end systems. A smaller memory profile also decreases design size for equivalent performance, directly translating into reduced cost of manufacture of parts.

What has been described is merely illustrative of the application of principles of embodiments of the invention. Other arrangements and methods can be implemented by those skilled in the art without departing from the scope of the present invention.

For example, although Fig. 2 shows only one set of standby thread registers per processor, other embodiments may be configured for operation with processors having multiple sets of standby thread registers. The standby and active registers represent a speed optimization, and accordingly need not be provided in all implementations. Thus, other embodiments of the invention may include processors with fewer internal registers.

The particular division of functions represented in Fig. 2 is similarly intended for illustrative purposes. The functionality of the thread manager, for instance, may be implemented in one or more of the processors, such that a processor may have more direct access to the shared thread storage memory.

It should also be appreciated that threads may be transferred into and out of an external shared memory for reasons other than input/output blocking. A thread may incorporate a sleep time or stop condition, for example, and be swapped out of a processor when in a sleep or stop state.

The manager and the external shared thread memory effectively allow one processor to access threads which were or are to be processed by another processor. In another embodiment, a manager or management function, implemented separately from the processors or integrated with one or more of the processors, may provide more direct access to threads between processors by allowing processors to access standby registers of other processors, for instance.

Single-processor embodiments are also contemplated. A thread manager could be operatively coupled to a memory for storing information associated with at least one processing operation, and to a processor. The processor may have access to multiple sets of registers for storing information associated with a processing operation currently being executed by the processor and one or more processing operations to be executed by the processor after completion of its execution of the current processing operation. The manager determines whether information stored in the memory is to be transferred to or from a set of registers of the plurality of sets of registers for storing the one or more processing operations, and if so, transfers information associated with a processing operation between the memory and the set of registers. Thus, the manager may transfer information between the memory and a processor's standby registers while the processor is executing a thread.

A collection of threads managed according to the techniques disclosed herein is not necessarily "static". At some point, execution of a thread may be completed, and the thread may then no longer be stored in thread registers or a shared thread store. New threads may also be added.

In addition, although described primarily in the context of methods and systems, other implementations of the invention are also contemplated, as instructions stored on a machine-readable medium, for example.

## Claims

1. A processing operation manager configured to transfer information associated with a processing operation, for which processing operation associated information had been previously transferred to one of a plurality of processors for use in executing the processing operation, to any processor of the plurality of processors which has capacity to accept the processing operation for execution.

2. The manager of claim 1, wherein the processing operation comprises a thread, and wherein the information associated with the processing operation comprises information stored in one or more thread registers.

3. The manager of claim 1, wherein each processor of the plurality of processors comprises an active information store for storing information associated with a processing operation currently being executed by the processor and a standby information store for storing information associated with a processing operation to be executed by the processor when it becomes available, and wherein the manager transfers the information associated with a processing operation to a processor by transferring the information from a memory into the standby information store of the processor.

4. The manager of claim 1 or claim 2, wherein the manager is further configured to determine a state of the processing operation, and to determine whether the information is to be transferred to a processor based on the state of the processing operation.

5. The manager of claim 3, wherein the manager is further configured to determine a state of each processing operation associated with information stored in the standby information store of each processor, and to transfer the information to a processor by transferring the information between the memory and a standby information store in which information associated with a processing operation having a particular state is stored.

6. The manager of claim 1 or claim 2, wherein the manager is further configured to determine a priority of the processing operation, and to determine whether the information is to be transferred to a processor based on the priority of the processing operation.

7. The manager of claim 3, wherein the manager is further configured to determine a priority of the processing operation and each processing operation associated with information stored in the standby information store of each processor, and to transfer the information to a processor by transferring the information between the memory and a standby information store in which information associated with a processing operation having a lower priority than the processing operation is stored.

8. The manager of claim 1, wherein a memory is operatively coupled to the manager and is configured to store information associated with one or more processing operations including the processing operation, and wherein the manager is configured to transfer the information associated with each of the one or more processing operations to a processor, of the plurality of processors, which has capacity to accept a processing operation for execution.

9. The manager of claim 8, wherein the manager is further configured to select a processor of the plurality of processors for transfer of information associated with each of the one or more processing operations based on at least one of:
states of the one or more processing operations and states of processing operations currently being executed by the plurality of processors;
priorities of the one or more processing operations and priorities of processing operations currently being executed by the plurality of processors;
states of the one or more processing operations and states of any processing operations to be executed when each of the plurality of processors becomes available;
priorities of the one or more processing operations and priorities of any processing operations to be executed when each of the plurality of processors becomes available; and
whether each processor is currently executing a processing operation.

10. A system comprising:
the manager of any one of claims 1 to 9; and
a memory for storing information associated with one or more processing operations including the processing operation.

11. A system comprising:
the system of claim 10; and
the plurality of processors.

12. The system of claim 11, wherein the manager is implemented using at least one processor of the plurality of processors.

13. A method comprising:
receiving information associated with a software processing operation, for which processing operation associated information had been previously transferred to a processor of a plurality of processors for use in executing the processing operation; and
transferring the information to any processor of the plurality of processors which has capacity to accept the processing operation for execution.

14. The method of claim 13, wherein the processing operation comprises a thread, and wherein the information associated with the processing operation comprises information stored in one or more thread registers.

15. The method of claim 13, wherein each processor of the plurality of processors comprises an active information store for storing information associated with a processing operation currently being executed by the processor and a standby information store for storing information associated with a processing operation to be executed by the processor when it becomes available, and wherein transferring comprises transferring information into the standby information store of the processor.

16. The method of claim 15, further comprising:
determining a state of each processing operation associated with information stored in the standby information store of each processor,
wherein transferring comprises transferring the information between a memory and a standby information store in which information associated with a processing operation having a particular state is stored.

17. The method of claim 15, further comprising:
determining a priority of the processing operation and each processing operation associated with information stored in the standby information store of each processor,
wherein transferring comprises transferring the information between a memory and a standby information store in which information associated with a processing operation having a lower priority than the processing operation is stored.

18. The method of any one of claims 13 to 17, further comprising:
repeating the receiving and transferring for a plurality of processing operations.

19. The method of claim 18, further comprising selecting a processor to which the information is to be transferred based on at least one of:
states of the plurality of processing operations and states of processing operations currently being executed by the plurality of processors;
priorities of the plurality of processing operations and priorities of processing operations currently being executed by the plurality of processors;
states of the plurality of processing operations and states of any processing operations to be executed when each of the plurality of processors becomes available;
priorities of the plurality of processing operations and priorities of any processing operations to be executed when each of the plurality of processors becomes available; and
whether each processor is currently executing a processing operation.

20. A machine-readable medium storing instructions which when executed perform the method of any one of claims 13 to 19.

21. A manager to be operatively coupled to a memory, the memory for storing information associated with at least one processing operation, and to a processor, the processor having access to a plurality of sets of registers for storing information associated with a processing operation currently being executed by the processor and one or more processing operations to be executed by the processor after completion of its execution of the current processing operation, the manager being configured to determine whether information stored in the memory is to be transferred to or from a set of registers of the plurality of sets of registers for storing the one or more processing operations, and if so, to transfer information associated with a processing operation between the memory and the set of registers.

22. The manager of claim 21, wherein the manager is configured to determine whether information is to be transferred based at least one of:
states of a processing operation associated with the information stored in the memory and of the one or more processing operations;
priorities of a processing operation associated with the information stored in the memory and of the one or more processing operations; and
whether the processor is currently executing a processing operation.

23. A system comprising:
the manager of claim 21 or claim 22; and
the memory.

24. A system comprising:
the system of claim 23; and
the processor.
